# EUROPÄISCHE PATENTSCHRIFT

(11) **EP 0 697 530 B1**
(45) Veröffentlichungstag und Bekanntmachung des Hinweises auf die Patenterteilung: **22.04.1998**
(21) Anmeldenummer: 95111135.0
(22) Anmeldetag: 15.07.1995
(51) Int. Cl.: F16B 13/14, E21D 20/02

(54) **Anker für Beton oder dergleichen**
Anchoring bolt for concrete or similar
Boulon d'ancrage pour béton ou similaire

(30) Priorität: 16.08.1994 DE 4429055
(43) Veröffentlichungstag der Anmeldung: 21.02.1996
(73) Patentinhaber: B + B TEC Aktiengesellschaft, 3178 Bösingen (CH)
(72) Erfinder: van den Boogaart, Robert Wilhelm, NL-5301 NW Zaltbommel (NL); van der Zalm, Antonie, NL-5301 GC Zaltbommel (NL)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 251 887
- DE-A- 3 014 078
- GB-A- 1 481 004
- GB-A- 2 006 367

## Beschreibung

Die Erfindung betrifft einen Anker für Beton oder dergleichen nach dem Oberbegriff des Anspruchs 1.

Die Erfindung bezieht sich auf einen Anker zur Verankerung von Teilen in in Beton, Fels, Gestein oder dergleichen gesetzten Bohrlöchern im Rahmen eines Verbunddübelsystems, wobei der gesetzte Anker insbesondere auf Zug beanspruchbar sein soll, auch wenn der Anker in der Zugzone des Betons montiert wird.

Die GB-A-1 481 004 zeigt einen Anker für Beton oder dergleichen mit einer Gewinde-Ankerstange und einer auf diese aufgeschraubten üblichen Mehrkantmutter mit einem rechteckigen äußeren Längsschnittprofil. Die Mutter weist über ihre gesamte Länge hin einen konstanten Innendurchmesser im Gewinde auf; sie ist durch eine Plastikkappe an dem dem Einführende für die Gewindestange gegenüberliegenden Ende verschlossen. Die Festlegung der Mutter an der Gewindestange in einem Bohrloch erfolgt durch in dieses eingeführtes Harzmaterial. Die Mutter und damit die Gewindestange werden in dem im Bohrloch einsitzenden Harzmaterial im wesentlichen formschlüssig über die das rückseitige Ende der Mutter bildende Schulter gehalten, wobei das Harzmaterial selbst im Bohrloch an dessen Wandungen reib- und teilweise durch Eindringen in Mikroöffnungen oder Poren auch formschlüssig gehalten wird. Aufgrund der Ausgestaltung des vorgenannten Gegenstandes mit einer kurzen Mutter mit zylindrischem Längsschnittprofil ist es notwendig, die die Mutter und damit die Stange haltende Schulter der Mutter relativ groß auszubilden, d.h. diese mit relativ großem Radius bzw. einer starken Wandung zu versehen, wie dies der Entgegenhaltung zu entnehmen ist. Damit ist es aber notwendig, eine Bohrung mit einem gegenüber dem Durchmesser der Gewindestange selbst relativen großen Durchmesser zu schaffen - beim Stande der Technik beträgt der Durchmesser das Dreifache der Gewindestange.

Der Erfindung liegt daher die Aufgabe zugrunde, einen Anker für Beton oder dgl. zu schaffen, der einen sicheren Halt bei relativ zu der Stärke der Ankerstange geringerem Bohrlochdurchmesser ermöglicht.

Zum Setzen von Ankern mit Zugbelastung wurde schon vorgeschlagen, Bohrlöcher mit einer konischen Hinterschneidung zu versehen. Ein Herstellen eines solchen Bohrloches ist äußerst aufwendig und daher mit hohen Kosten verbunden. Es sind weiter Anker bekannt, die aber als Sonderteile gefertigt werden müssen und daher und aufgrund ihrer speziellen Ausgestaltung mit einem sehr hohen Fertigungsaufwand verbunden sind, der ebenfalls zu sehr hohen Kosten führt, insbesondere wenn diese Anker korrosionsfrei sein sollen.

Erfindungsgemäß wird die genannte Aufgabe bei einem Anker der eingangs genannten Art durch die kennzeichnenden Merkmale des Anspruchs 1 gelöst.

Die Erfindung sieht also eine herkömmliche Gewinde-Ankerstange vor, die durch Ablängen von Endlos-Gewindestangen, vorzugsweise senkrecht zur Achse, hergestellt werden kann und damit äußerst preiswert ist, selbst wenn sie aus korrosionsfreiem Stahl besteht. Zusätzlich ist eine auf die Ankerstange aufgeschraubte, sich von der Ankerstange her zu ihrem eigenen freien Ende konisch erweiternde, ebenfalls vorzugsweise korrosionsfreie Endmutter vorgesehen, die auf ihrer Außenseite eine Profilierung aufweist. Dadurch, daß bei Einsatz dieses Ankers als Verbunddübel, also zusammen mit vorher eingebrachtem Klebstoff oder Mörtel, sich der Klebstoff oder Mörtel vor der erweiterten Endmutter ansammelt und ausgehärtet ist und dabei eine innige Verbindung zunächst mit dem umgebenden Beton eingeht, wird eine zuverlässige kraft- und formschlüssige Festlegung des erfindungsgemäßen Ankers im gebohrten Betonloch sichergestellt. Die Länge des sich erweiternden Bereiches der Endmutter sollte mehr als 1/8 ihrer Gesamtlänge betragen.

Die Profilierung ist insbesondere eine schraubenförmig verlaufende Nut, die einen V-förmigen Querschnitt hat. In diese Profilierung kann Mörtel- bzw. Klebstoffmasse vor dem Aushärten eindringen und nach dem Aushärten die formschlüssige Verbindung verstärken.

Eine weitere bevorzugte Ausgestaltung des erfindungsgemäßen Ankers sieht vor, daß die Endmutter an ihrem freien Ende eine Abschrägung aufweist, wobei insbesondere die Abschrägung einen Winkel von 30 bis 60° zur Achse des Ankers einschließt. Hierdurch kann nach Einbringen des Ankers in das Bohrloch, in dem sich schon die Verbunddübelpatrone bzw. der Mörtel oder Klebstoff befindet, durch Drehen des Ankers vor Aushärten des Mörtels/Klebstoffs eine gute Durchmischung, insbesondere wenn ein Zweikomponenten-Klebstoff-System verwendet wird, erzielt werden. Dies ist insbesondere der Fall, wenn die Abschrägung sich über die gesamte Breite der Endmutter erstreckt.

Eine weitere bevorzugte Ausgestaltung sieht vor, daß die Ankerstange mit einer aufgeschrumpften Hülle versehen ist. Während die auf den Anker aufgeschrumpfte Hülle sich mit der Mörtelmasse und über diese mit dem Beton verbindet und damit drehfest gehalten wird, ergibt sich durch diese Ausgestaltung keine Klebeverbindung zwischen der Ankerstange im Bereich der Hülle. Die mit der tief im Inneren des Betons in der beschriebenen Weise festgelegten Endmutter durch eine Schraubverbindung verbundene Ankerstange kann also durch Herausschrauben aus der Endmutter entfernt und ausgewechselt werden.

Insgesamt bietet die Erfindung eine Vielzahl von Vorteilen. Durch die erfindungsgemäße Ausgestaltung eines Ankers mit aufgeschraubter, sich erweiternder Endmutter wird die Belastung tief in den Beton übertragen, während es im vorderen Bereich der Ankerstange keine Klebverbindung derselben mit der Bohrlochwandung gibt, sich dort aber die die formschlüssige Verbindung für die Endmutter gewährleistende ausgehärtete Verbundmasse gebildet hat. Hierdurch wird weiterhin erreicht, daß auch im Falle eines Risses im Beton, auch in der Zugzone, im Bohrloch eine sichere Festlegung und damit hinreichende Übertragung von Traglast gewährleistet bleibt.

Der erfindungsgemäße Anker wird im Rahmen eines Verbunddübelsystems eingesetzt, bei dem beispielsweise Verbunddübelpatronen nach der DE 41 06 680 A1, der DE 41 32 625 A1 oder gegebenenfalls mit Verstärkung durch Stahlnadeln nach der DE 37 41 320 A1 verwendet werden; es sind aber grundsätzlich auch andere Verbunddübelpatronen einsetzbar.

Weitere Vorteile und Merkmale der Erfindung ergeben sich aus den Ansprüchen und aus der nachfolgenden Beschreibung, in der ein bevorzugtes Ausführungsbeispiel der Erfindung unter Bezugnahme auf die Zeichnung im einzelnen erläutert ist. Dabei zeigt:

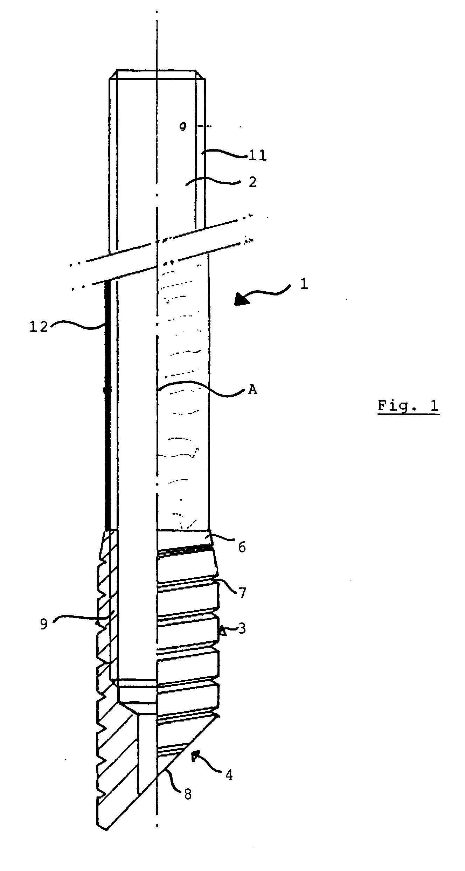

- Figur 1: eine Darstellung des erfindungsgemäßen Ankers, teilweise geschnitten; und
- Figur 2: eine Darstellung des Einsatzes des erfindungsgemäßen Ankers als Verbunddübel in Beton.

Der erfindungsgemäße Anker 1 weist eine Ankerstange 2 auf. Hierbei handelt es sich um eine übliche Gewindestange aus geeignetem Stahl, wobei die Ankerstange 2 lediglich durch Ablängen einer Endlosgewindestange senkrecht zu ihrer Achse in der gewünschten Länge erzeugt ist. Auf die Ankerstange 2 ist eine Endmutter 3 aufgeschraubt, die von der Gewindestange her in Richtung auf ihr freies Ende 4 einen konischen Erweiterungsabschnitt 6 aufweist, dessen Länge etwa 1/8 bis 1/4 der Gesamtlänge der Endmutter 3 beträgt.

Auf der Außenseite weist die Endmutter 3 eine schraubenförmig verlaufende V-Nut 7 auf. An ihrem freien Ende 4 ist sie mit einer über ihre gesamte Breite hin verlaufenden Abschrägung 8, die hier unter 45° zur Achse A verläuft, versehen. Die Endmutter 3 weist ein Innengewinde 9 auf, das dem Außengewinde 11 der Ankerstange 2 entspricht bzw. angepaßt ist. Die Ankerstange 2 ist über einen Teil ihrer Länge mit einer aufgeschrumpften Hülle 12 aus geeignetem Material, wie eben Kunststoff, versehen.

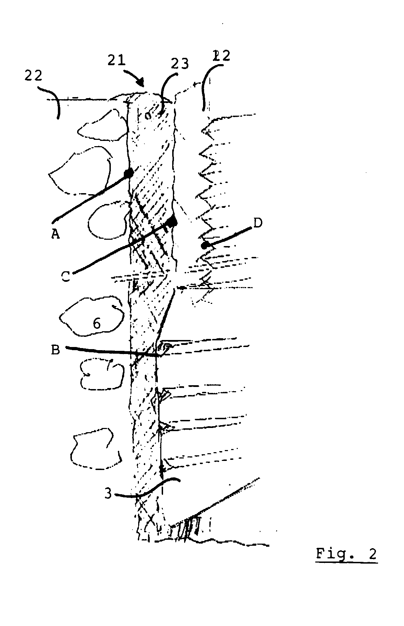

Die Festlegung des erfindungsgemäßen Ankers 1 geschieht grundsätzlich in an sich bekannter Weise. Zunächst wird in ein Bohrloch 21 (Fig. 2) eine herkömmliche Verbunddübelpatrone, wie sie aus der DE 41 06 680 A1 oder der DE 41 32 625 A1 bekannt ist, gegebenenfalls mit Verstärkungsnadeln, wie aus der DE 37 41 320 A1 bekannt, in das Bohrloch eingebracht. Anschließend wird der erfindungsgemäße Anker 1 in das Bohrloch eingeschlagen, wobei die Umhüllung der Verbunddübelpatrone zerstört wird, so daß deren Klebstoffinhalt austreten kann und sich gegebenenfalls die beiden Komponenten vermischen können. Zur besseren Vermischung wird der Anker 1 im Bohrloch gedreht, wobei die Abschrägung 8 eine optimale Vermischung der Klebstoffkomponenten bewirkt.

Anschließend erfolgt das Aushärten der Verbundmasse 23. Es erfolgt eine innige Klebstoffverbindung zwischen dem Beton 22 und der Verbundmasse 23 (bei A) und zwischen der Verbundmasse 23 und der Endmutter 3 (bei B). Weiterhin erfolgt eine Verbindung zwischen Verbundmasse 23 und der Schrumpfhülle 12 (bei C). Keine Klebverbindung entsteht bei dem dargestellten Ausführungsbeispiel zwischen der Schrumpfhülle 12 und der Ankerstange 2 (bei D).

Die Verbundmasse dringt dabei in die Nuten 7 der Endmutter 3 ein. Weiterhin hintergreift die Verbundmasse den konischen Bereich 6 der Endmutter 3.

Im ausgehärteten Zustand werden die Lasten von der Ankerstange über die Endmutter und die Verbunddübelmasse in den Beton eingetragen. Hierdurch wird die Belastung tief in das Innere des Betons übertragen, während es im rückwärtigen oder äußeren Bereich der Ankerstange 3 keine feste Verbindung zwischen dieser und der Bohrlochwandung gibt, dieser Bereich aber dennoch durch ausgehärtete, zylindrische Verbundmasse ausgefüllt ist. Durch die Formgebung der Endmutter, insbesondere ihren rückwärtigen, konischen Bereich 6, wird erreicht, daß auch im Falle eines Risses in der Zugzone des Betons und der Verbundmasse der Anker weiterhin sicher gehalten wird, so daß auch bei einem solchen Riß bei der Verwendung des erfindungsgemäßen Ankers genügend Traglast aufgenommen werden kann.

## Patentansprüche

1. Anker für Beton oder dergleichen, mit einer Gewinde-Ankerstange (2) in Form einer üblichen Gewindestange und mit einer auf diese aufgeschraubten Mutter (3), dadurch gekennzeichnet, daß die Mutter (3) einen von ihrem rückwärtigen Ende zu ihrem freien Ende sich konisch erweiternden Bereichen (6) aufweist und auf ihrer Außenseite mit einer Profilierung versehen ist.

2. Anker nach Anspruch 1, dadurch gekennzeichnet, daß die Profilierung eine schraubenförmig verlaufende Nut (7) ist.

3. Anker nach Anspruch 2, dadurch gekennzeichnet, daß die Nut (7) einen V-förmigen Querschnitt hat.

4. Anker nach einem der vorangehenden Ansprüche, dadurch gekennzeichnet, daß die Endmutter (3) an ihrem freien Ende eine Abschrägung (8) aufweist.

5. Anker nach Anspruch 4, dadurch gekennzeichnet, daß die Abschrägung (8) einen Winkel von 30 bis 60° zur Achse (A) des Ankers (1) einschließt.

6. Anker nach Anspruch 4 oder 5, dadurch gekennzeichnet, daß die Abschrägung (8) über die gesamte Breite der Endmutter (3) verläuft.

7. Anker nach einem der vorangehenden Ansprüche, dadurch gekennzeichnet, daß der sich erweiternde Bereich (6) der Endmutter eine Länge von mehr als 1/8 der Gesamtlänge der Endmutter (3) hat.

8. Anker nach einem der vorangehenden Ansprüche, dadurch gekennzeichnet, daß die Ankerstange (2) mit einer aufgeschrumpften Hülle (12) versehen ist.

9. Anker nach einem der vorangehenden Ansprüche, dadurch gekennzeichnet, daß die Ankerstange (2) quer zu ihrer Erstreckungsrichtung (Achse A) abgelängt ist.

## Claims

1. Tie bolt for concrete or the like, having a threaded tie rod (2) in the form of a conventional threaded rod and with a nut (3) screwed thereon, characterized in that the nut (3) has conically widening areas (6) extending from its rear end to its free end and has a profiling on its outside.

2. Tie bolt according to claim 1, characterized in that the profiling is a helically directed groove (7).

3. Tie bolt according to claim 2, characterized in that the groove has a V-shaped cross-section.

4. Tie bolt according to one of the preceding claims, characterized in that the free end of the end nut (3) has a bevel (8).

5. Tie bolt according to claim 4, characterized in that the bevel (8) forms an angle of 30 to 60° with the axis (A) of the tie bolt (1).

6. Tie bolt according to claim 4 or 5, characterized in that the bevel (8) passes over the entire width of the end nut (3).

7. Tie bolt according to one of the preceding claims, characterized in that the widening area (6) of the end nut has a length of more than 1/8 of the total length of the end nut (3).

8. Tie bolt according to one of the preceding claims, characterized in that the tie rod (2) is provided with a shrunk-on sleeve (12).

9. Tie bolt according to one of the preceding claims, characterized in that the tie rod (2) is cut to length transversely with respect to its extension direction (axis A).

## Revendications

1. Boulon d'ancrage pour béton ou similaire, comprenant une barre d'ancrage filetée (2) sous la forme d'une tige filetée classique et un écrou (3) vissé sur celle-ci, caractérisé en ce que l'écrou (3) présente une zone (6) s'élargissant en forme conique à partir de son extrémité arrière vers son extrémité libre et en ce qu'elle présente un profilage sur sa face extérieure.

2. Boulon d'ancrage selon la revendication 1, caractérisé en ce que le profilage correspond à une rainure (7) hélicoïdale.

3. Boulon d'ancrage selon la revendication 2, caractérisé en ce que la rainure (7) présente une section en forme de "V".

4. Boulon d'ancrage selon l'une quelconque des revendications précédentes, caractérisé en ce que l'extrémité libre de l'écrou d'extrémité (3) est en biseau (8).

5. Boulon d'ancrage selon la revendication 4, caractérisé en ce que le biseau (8) forme un angle intérieur de 30 à 60° avec l'axe (A) du boulon d'ancrage (1).

6. Boulon d'ancrage selon la revendication 4 ou 5, caractérisé en ce que le biseau (8) s'étend sur toute la largeur de l'écrou d'extrémité (3).

7. Boulon d'ancrage selon l'une quelconque des revendications précédentes, caractérisé en ce que la longueur de la zone (6) de l'écrou qui s'élargit correspond à plus d'un huitième de la longueur totale de l'écrou d'extrémité (3).

8. Boulon d'ancrage selon l'une quelconque des revendications précédentes, caractérisé en ce que la barre d'ancrage (2) est pourvue d'une gaine (12) frettée.

9. Boulon d'ancrage selon l'une quelconque des revendications précédentes, caractérisé en ce que la barre d'ancrage (2) est coupée à longueur transversalement à sa direction longitudinale (axe A).
